Europäisches Patentamt

European Patent Office

Office européen des brevets

(11) Veröffentlichungsnummer : **0 012 958**
**B1**

(12) **EUROPÄISCHE PATENTSCHRIFT**

(45) Veröffentlichungstag der Patentschrift :
**20.04.83**

(51) Int. Cl.³ : **G 01 P 21/00, G 01 M 7/00**

(21) Anmeldenummer : **79105187.3**

(22) Anmeldetag : **14.12.79**

(54) **Prüfeinrichtung für Beschleunigungssensoren.**

(30) Priorität : **20.12.78 DE 2855162**

(43) Veröffentlichungstag der Anmeldung :
**09.07.80 Patentblatt 80/14**

(45) Bekanntmachung des Hinweises auf die Patenterteilung : **20.04.83 Patentblatt 83/16**

(84) Benannte Vertragsstaaten :
**DE FR GB SE**

(56) Entgegenhaltungen :
**US A 3 001 393**
**US A 3 430 481**
**US A 3 485 083**

(73) Patentinhaber : **Fraunhofer-Gesellschaft zur Förderung der angewandten Forschung e.V.**
**Leonrodstrasse 54**
**D-8000 München 19 (DE)**

(72) Erfinder : **Gold, Henning, Prof. Dr.**
**Im Rheinblick 29**
**D-6530 Bingen (DE)**

Jouve, 18, rue St-Denis, 75001 Paris, France

Prüfeinrichtung für Beschleunigungssensoren

Die Erfindung betrifft eine Prüfeinrichtung für Beschleunigungssensoren nach dem Oberbegriff des Anspruchs 1.

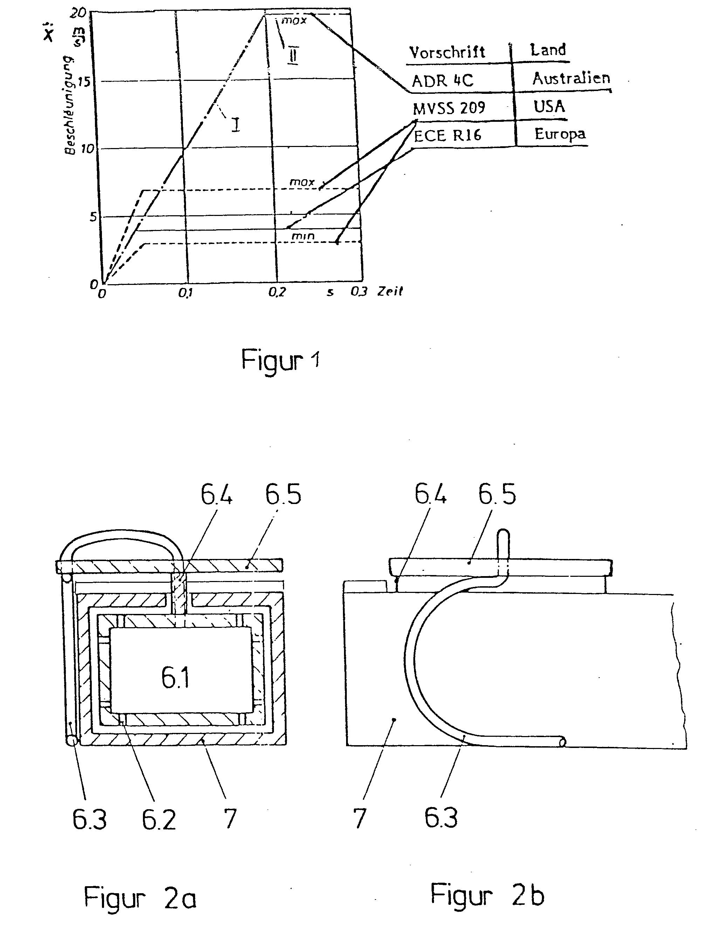

Beschleunigungssensoren sind Schaltelemente, die bei einer definierten Beschleunigung ansprechen und einen mechanischen oder elektrischen Schaltvorgang ausführen. Sie dienen z. B. zum Auslösen von automatischen, passiven und aktiven Rückhaltesystemen, insbesondere für Fahrzeuginsassen (Automatikgurt, Airbag, Gurtstrammer). Zur Entwicklung und Überprüfung solcher Sensoren ist eine Versuchseinrichtung erforderlich, die einen Bewegungsablauf X erzeugt, bei dem eine Beschleunigung $\ddot{X}$ über eine vorgegebene Zeit konstant gehalten wird. Der Betrag von $\ddot{X}$ muß dabei kontinuierlich einstellbar sein. Er soll zu Anfang des Bewegungsablaufes in definierter Form ohne Überschwingen erreicht werden. Gewünschte Beschleunigungsabläufe sind in Figur 1 dargestellt. Der Bewegungsablauf X ist demnach in die beiden folgenden Abschnitte aufzuteilen :

I. Beschleunigungsanstieg $\ddot{X}$

Die Beschleunigung soll linear ansteigen, d. h. $\ddot{X}$ = konstant. Der Übergang in die konstante Beschleunigung $\ddot{X}$ = konst. soll ohne Überschwingen in möglichst kurzer Zeit (« scharfkantig ») erfolgen.

II. Konstante Beschleunigung $\ddot{X}$

Der Betrag der konstanten Beschleunigung soll stufenlos variierbar sein.

Aus der Patentschrift US-A-30 01 393 ist eine Testeinrichtung mit einem pneumatisch angetriebenen Schlitten bekannt, auf dem Prüflinge einer zunächst ansteigenden und dann gleichbleibenden Beschleunigung unterworfen werden können. Diese bekannte Einrichtung soll hauptsächlich zur Untersuchung der Haltbarkeit von Geräten bei Beschleunigungen dienen, wie sie während der Startphase an mit Raketen angetriebenen Flugkörpern hervorgerufen werden. Die Testeinrichtung ist deshalb auf die Simulation der hierbei auftretenden Beschleunigungsabläufe eingerichtet und nicht für die Prüfung von Beschleunigungssensoren mit dem geforderten Bewegungsablauf geeignet.

Aus der Patentschrift US-A-34 85 083 ist eine Einrichtung bekannt, bei der der Kolben der pneumatischen Antriebseinheit unmittelbar mit dem Schlitten verbunden ist.

Der Erfindung liegt deshalb die Aufgabe zugrunde eine Beschleunigungseinrichtung nach der Patentschrift US-A-30 01 393 derart weiterzubilden, daß ein Beschleunigungsablauf gemäß den eingangs definierten Abschnitten I und II erzielt werden kann.

Die Lösung dieser Aufgabe erfolgt erfindungsgemäß durch die kennzeichnenden Merkmale des Anspruchs 1. Vorteilhafte Weiterbildungen und konstruktive Einzelheiten der Prüfeinrichtung sind in den Unteransprüchen angegeben.

Durch den unmittelbaren pneumatischen Antrieb des Schlittens sowie durch die spezielle Ausbildung der Steuer- und der Antriebsmittel wird es ermöglicht, den jeweils gewünschten Beschleunigungsablauf exakt und reproduzierbar zu verwirklichen, ohne daß störende Nebenerscheinungen auftreten.

Im folgenden ist ein Ausführungsbeispiel der Erfindung anhand der schematischen Zeichnungen und Diagramme einschließlich seiner Wirkungsweise beschrieben. Es zeigen :

Figur 1 in einem Diagramm verschiedene vorgeschriebene Beschleunigungsabläufe für den Test von Beschleunigungssensoren,

Figur 2 eine vereinfachte Darstellung der mechanischen Teile mit dem Schlittenantrieb im Längsschnitt sowie die pneumatische Schaltung der Prüfeinrichtung,

Figur 2a und 2b Einzelheiten des Schlittenantriebs nach Figur 2,

Figur 3 die Anordnung eines Rollbalges zwischen konischen Kolben- und Zylinderflächen sowie die Veränderung der Rollbalgbiegung beim Anfahren des Schlittens,

Figur 4 einen elektrischen Schaltplan der Prüfeinrichung,

Figur 5 in einem Diagramm die prinzipielle Abhängigkeit des Beschleunigungsverlaufes vom Anfangsdruck p.

Die Figur 1 zeigt die in verschiedenen Ländern vorgeschriebenen Beschleunigungsabläufe für die Prüfung von Beschleunigungssensoren für passive Rückhaltesysteme in Kraftfahrzeugen. Aus den dargestellten Kurven ergibt sich, daß bei einer allgemein verwendbaren Prüfeinrichtung die Größe der zu erreichenden konstanten Beschleunigung zumindest im Bereich von 2-20 m/sec$^2$ einstellbar sein muß.

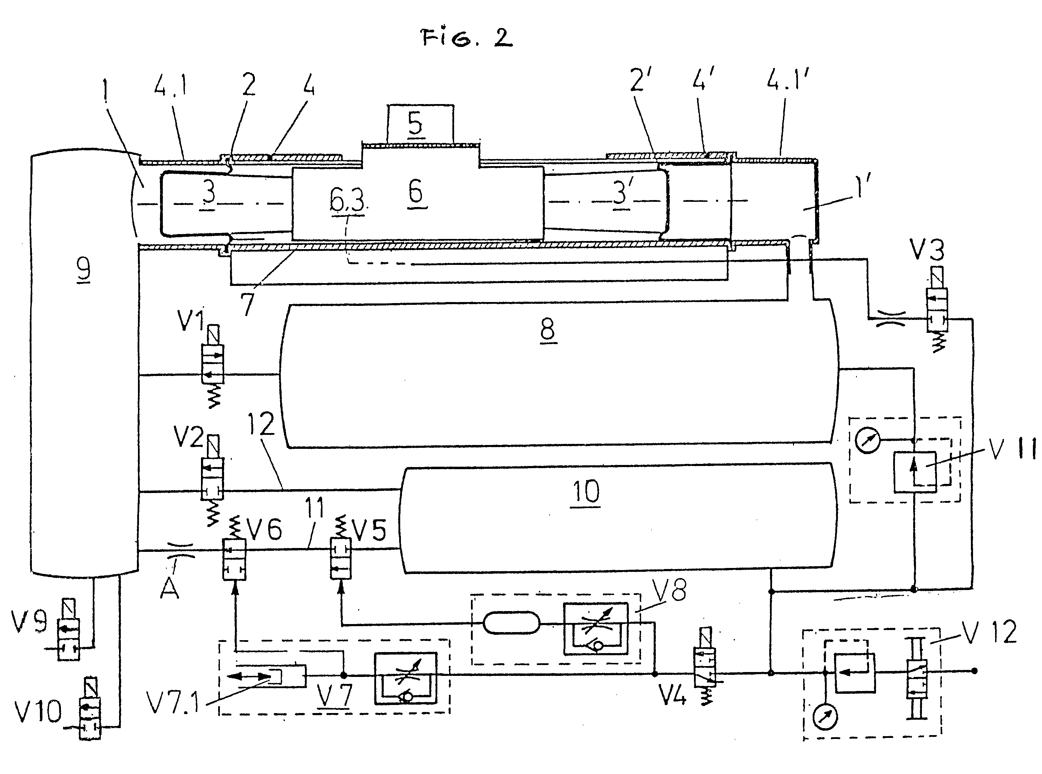

Einen Überblick über die wesentlichen mechanischen Teile einer erfindungsgemäßen Prüfeinrichtung mit der pneumatischen Steuereinrichtung gibt die Figur 2 unter besonderer Berücksichtigung des Schlittenantriebs, der im senkrechten Längsschnitt dargestellt ist. Einzelheiten des Schlittens und der Luftzuführung zum Schlitten sind aus den Figuren 2a und 2b ersichtlich.

Der Schlitten 6 weist unten einen hohlen, im Querschnitt rechteckigen Schlittenkörper 6.1 auf, der in einem ortsfesten T-Nut-förmigen Bett 7 läuft und unten, seitlich sowie oben Luftaustrittsbohrungen 6.2 für ein Luftlager trägt. Die Luftaustrittsbohrungen 6.2 sind an dem Schlittenkörper 6.1 so angeordnet und aufgeteilt, daß fünf Freiheitsgrade des Schlittens 6 gefesselt sind und nur der Freiheitsgrad in der Bewegungsrichtung verbleibt. Die für das Luftlager erforderliche Druckluft wird dem Schlittenkörper über ein Ventil V3 und über eine sich neben dem Bett 7 abwälzende Schlauchschleife 6.3 zugeführt. Zur Verminderung des Geräusches und des Luftverbrauches kann die Luftzufuhr beim Start des Schlittens 6 geöffnet und nach dem Rücklauf über einen Verzögerungsschalter ES3, Z wieder geschlossen werden. Der Schlittenkörper 6.1 weist oben einen mittig angeordneten Längssteg 6.4 auf, der aus dem T-Nut-förmigen Bett 7 ragt und eine Montageplatte 6.5 für einen oder mehrere Prüflinge 5 (z. B. Gurtautomaten) trägt.

An seinen beiden Stirnseiten trägt der Schlitten 6 einen Kolben 3 bzw. 3', dessen Achse in der Bewegungsrichtung des Schlittens verläuft. Die Kolben 3 und 3' laufen in Zylindern 4 und 4'. Sie sind gegen diese durch dünnwandige Rollbälge 2, 2' abgedichtet.

In den sich an die Zylinder 4 und 4' anschließenden Balgtöpfen 4.1 und 4.1' schließen die Rollbälge 2 bzw. 2' je einen Luftraum 1 bzw. 1' dichtend ab. Der Druck in den Lufträumen 1 bzw. 1' übt über die von den Rollbälgen 2 bzw. 2' gebildeten, wirksamen Balgflächen eine Kraft auf die Kolben 3 bzw. 3' und damit eine resultierende Kraft auf den Schlitten 6 aus. Sind die Drücke in den beiden Lufträumen 1 und 1' gleich, so wirkt keine resultierende Kraft auf den Schlitten. Ist der Druck im linken Luftraum 1 größer als im rechten Luftraum 1', so bewegt sich der Schlitten nach rechts, im umgekehrten Fall nach links. Ist die Druckdifferenz konstant, so ist auch die Antriebskraft konstant und somit auch die Beschleunigung des Schlittens. Steigt die Druckdifferenz linear an, so steigt auch die Schlittenbeschleunigung linear an.

Der Luftraum 1 ist über einen großen Querschnitt mit einem Luftkessel 9 und dieser über eine Leitung 11 mit einem Drosselquerschnitt A mit einem Druckluftvorratskessel 10 verbunden, während der Luftraum 1' drosselarm mit einem weiteren Luftkessel 8 in Verbindung steht.

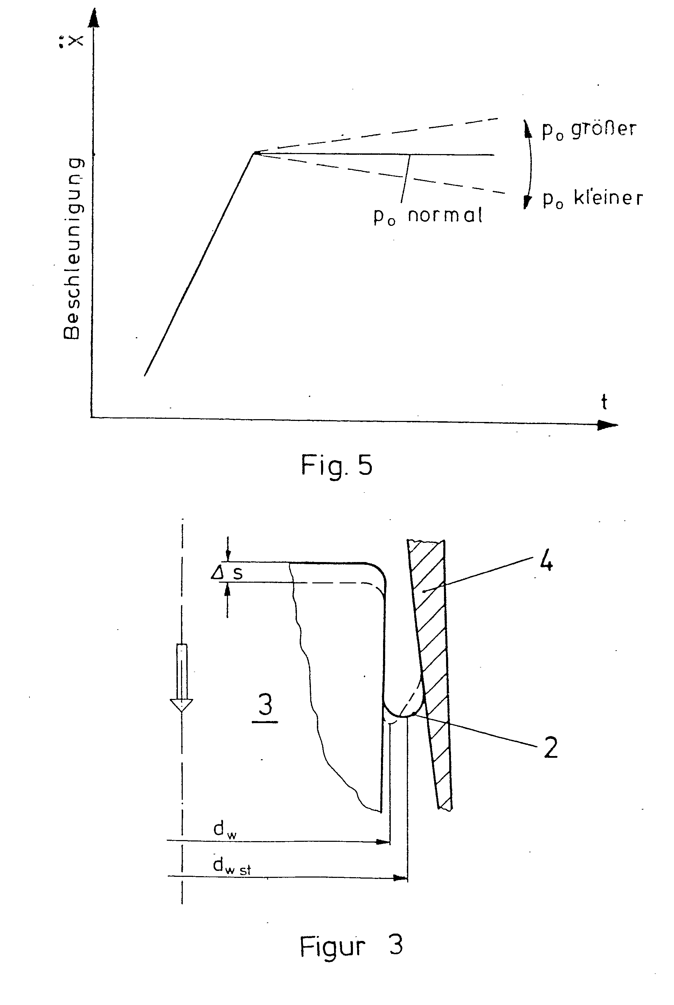

Ein linearer Druckanstieg in dem Luftkessel 9 und damit auch in dem Luftraum 1 wird durch Zufuhr von Druckluft aus dem Vorratskessel 10 über den Drosselquerschnitt A mit konstanter Strömungsgeschwindigkeit erreicht. Da die Strömungsgeschwindigkeit in dem Drosselquerschnitt A im Unterschallbereich von der Druckdifferenz in den beiden durch den Drosselquerschnitt A verbundenen Kesseln 9 und 10 abhängt, die Druckdifferenz sich aber durch die übergeströmte Luftmenge ändert, ist es erforderlich, die Druckdifferenz so groß zu machen, daß während des gesamten Überströmvorganges vom Kessel 10 in den Kessel 9 ein überkritisches Druckverhältnis am Drosselquerschnitt A herrscht. Der Drosselquerschnitt A ist so gestaltet, daß keine Strömungsgeschwindigkeit schneller als die Schallgeschwindigkeit auftritt. Im engsten Querschnitt A der Drossel herrscht dann während des gesamten Überströmvorganges eine konstante Strömungsgeschwindigkeit, nämlich Schallgeschwindigkeit. Diese ist nur von der Temperatur im Kessel 10 und vom Absolutdruck im Druckkessel 9 abhängig. Die sich hieraus ergebende, geringe Änderung des Volumenflusses ist für den vorliegenden Anwendungsfall unwesentlich. Bei der Einstellung kleiner Beschleunigungswerte können sich in den Druckkesseln 9 und 10 so geringe Absolutdruckänderungen ergeben, daß auch unterhalb des kritischen Druckverhältnisses ein hinreichend konstanter Volumenfluß gewährleistet ist. Der Betrag des Beschleunigungsanstieges $\ddot{X}$ ist proportional dem Drosselquerschnitt A und der Schlittenmasse und läßt sich durch diese Größen einstellen. Wird also Druckluft dem Luftkessel 9 und damit dem linken Luftraum 1 über den mit etwa Schallgeschwindigkeit durchströmten Drosselquerschnitt A zugeführt, so bewegt sich der Schlitten 6 mit konstantem Beschleunigungsanstieg ($\ddot{X}$ = konstant). Sobald die Luftzufuhr unterbrochen wird, bleibt die auf die Kolben 3 und 3' wirkende Druckdifferenz bei großem Volumen der Luftkessel 8 und 9 etwa konstant, so daß sich der Schlitten mit konstanter Beschleunigung X weiter bewegt. Wegen der endlichen Größe der Luftkessel 8 und 9 bewirken die durch die Kolbenbewegungen eintretenden Veränderungen der Lufträume 1 und 1' aber Druckänderungen in diesen Räumen. Diesem unerwünschten Effekt wird durch konische Ausbildung der Kolben- und/oder Zylinderflächen entgegengewirkt, die den wirksamen Querschnitt der Rollbälge 2, 2' beeinflußt. Die Konizität wird so gewählt, daß das Produkt aus dem jeweiligen Druck und der wirksamen Balgfläche bei einem konstanten Luftgewicht in den von den Rollbälgen 2 bzw. 2' jeweils begrenzten Gesamtvolumina der Räume 1 und 9 bzw. 1' und 8 immer konstant ist, unabhängig von der Kolbenstellung. Diese Bedingung muß nicht von jedem Kolben-Volumenpaar für sich erfüllt sein, sondern nur von der Summe beider Paare. Die Anordnung eines Rollbalges zwischen konischen Kolben- und Zylinderflächen zeigt die Figur 3. In dieser bedeutet $d_w$ den für die Kraftübertragung maßgebenden Durchmesser des Rollbalges, der die wirksame Arbeitsfläche $A_w$ des Rollbalges bestimmt.

Für die Ermittlung von $d_w$ ist die folgende Balgeigenschaft zu beachten:

Der zwischen der Zylinderwand und der Kolbenwand befindliche Rollbalg bildet bei ruhendem Kolben einen etwa halbkreisförmigen Rollwulst (ausgezogene Linie in Figur 3) mit einem wirksamen Balgdurchmesser dwst. Bewegen sich jedoch Kolben und Zylinder axial zueinander, so verformt sich der Rollwulst durch Adhäsion asymmetrisch gemäß der gestrichelten Linie. Dadurch entsteht der maßgebende Balgdurchmesser $d_w$. Erfolgt dieser Vorgang während der definierten Beschleunigungsphase des Schlittens, so wird durch die Änderung der wirksamen Arbeitsfläche $A_w$ der Beschleunigungsverlauf beeinträchtigt. Dies wird besonders kritisch, wenn der Betrag der konstanten Beschleunigung klein ist. Weil die geschilderte Rollwulstverformung jedoch in den ersten 5-10 mm Schlittenweg $\Delta S$ erfolgt und dann unabhängig von der Geschwindigkeit konstant bleibt, ist es zumindest bei kleinen Schlittenbeschleunigungen erforderlich, den Schlitten langsam anlaufen zu lassen, bevor der definierte Beschleunigungsverlauf einsetzt. Der Schlitten muß somit einen Vorlauf erfahren, ehe die definierte Beschleunigungsphase beginnt.

Anhand der pneumatischen Schaltung gemäß Figur 2 und der elektrischen Schaltung nach Figur 4 wird im folgenden der Bewegungsablauf des Schlittens erläutert (Ventile und Schalter in Anfangsstellung).

In der Anfangsstellung steht der Schlitten 6 in der Figur 2 links. Die beiden Luftkessel 9 und 8 sind über ein Ventil V1 miteinander verbunden, so daß in beiden Kesseln derselbe Druck herrscht. Wegen der Konizität der Kolben 3, 3' und der Zylinder 4, 4' ist die wirksame Arbeitsfläche des linken Rollbalges 2 jedoch kleiner als die des rechten Balges 2'. Dies führt zu einer resultierenden Kraft auf den Schlitten 6, der dadurch gegen seinen linken, nicht dargestellten federnden Anschlag gedrückt wird und damit eine definierte Ausgangsposition erhält. Der Anschlag muß relativ hart sein. Sein Federweg soll nicht größer sein als der zur Ausbildung des Balgwulstes erforderliche Vorlaufweg $\Delta s$ (Fig. 3), weil der Anschlag sonst die Linearität des Beschleunigungsanstiegs störend beeinflußt.

Beim Drücken des Startknopfes S1 (Fig. 4) wird

1. das Ventil V1 geschlossen und damit die Verbindung der Luftkessel 9 und 8 unterbrochen,

2. durch das Ventil V2 ein kleiner Überströmungsquerschnitt zwischen dem Druckluftvorratskessel 10 und dem Luftkessel 9 geöffnet. Der Überströmquerschnitt muß so klein sein, daß sich der Schlitten 6 nun langsam bewegt und sich die Form des Wulstes an den Rollbälgen 2, 2' auf den maßgebenden Balgdurchmesser $d_w$ (Fig. 3) einstellen kann,

3. durch das Ventil V3 die Leistung 6.3 zu dem Luftlager freigegeben. Das Luftlager hat ausreichend Zeit seine Tragfähigkeit aufzubauen, weil der Schlitten 6 sich erst bewegen kann, wenn die Druckdifferenz in den Lufträumen 1 und 1' groß genug ist, um die Differenz der wirksamen Balgflächen zu kompensieren.

Nach einem Schlittenweg $\Delta s$ von etwa 5 bis 10 mm wird von dem Schlitten 6 ein weiterer Schalter ES2 betätigt. Dadurch wird

1. von dem Ventil V2 der kleine Überström-Querschnitt geschlossen,

2. mit Ventil V4 die Steuerung für den Beschleunigungsablauf eingeschaltet, d. h. die Leitung 11 mit dem Drosselquerschnitt A zwischen dem Druckluftvorratskessel 10 und dem Luftkessel 9 wird für eine bestimmte Zeit wie folgt geöffnet und dann wieder geschlossen.

Die Öffnungsdauer zum Drosselquerschnitt A ist bei einem gegebenen Beschleunigungsanstieg $\dot{X}$ ein Maß für den Betrag des konstanten Beschleunigungsablaufes $\ddot{X}$. Bei einem linearen Beschleunigungsanstieg von $\dddot{X} = 100$ m/sec$^3$ ist z. B. eine Zeit von 0,02 s erforderlich, um eine konstante Beschleunigung von $\ddot{X} = 2$ m/sec$^2$ zu erreichen. Diese kurze Zeit zwischen Öffnen und Schließen ist mit handelsüblichen pneumatischen Ventilen nicht zu verwirklichen. Deshalb werden ein öffnendes Ventil (Öffner) V5 und ein schließendes Ventil (Schließer) V6 hintereinandergeschaltet. Die Ventile V5 und V6 sind zur Erzielung möglichst schneller Schaltvorgänge pneumatisch gesteuert. Ihr Ventilquerschnitt soll erheblich größer sein als der Drosselquerschnitt A, damit der Einfluß der Ventilbewegung auf den maßgebenden Überströmquerschnitt auf eine möglichst kurze Zeit beschränkt bleibt.

Die Ventile V5 und V6 werden über je ein pneumatisches, einstellbares Verzögerungsventil V8 bzw. V7 angesteuert. Die beiden Verzögerungsventile werden gleichzeitig von einem gemeinsamen Steuerventil angesteuert V4. Die Öffnungszeit ergibt sich als Differenz zwischen der Verzögerungszeit des Schließers V6 und der Verzögerungszeit des Öffners V5.

Das Verzögerungsventil V7 des Schließers besteht zweckmäßig aus einer konstanten Drossel und aus einem variablen Volumen, das durch einen in einem Zylinder verschiebbaren Kolben V7.1 gebildet sein kann. Der Kolbenweg ist dabei proportional dem Volumen und damit proportional der Verzögerungszeit des Schließers. Das Verzögerungsventil V8 für den Öffner ist zur Anpassung der unterschiedlichen Ansprechzeiten der beiden Ventile V5 und V6 erforderlich, die durch Totvolumina, wie Schlauchleitungen, bedingt sind. Dieses Verzögerungsventil V8 besteht, wie handelsüblich, aus einer variablen Drossel und einem konstanten Volumen.

Die Nichtlinearität solcher Ventile ist beim Abstimmvorgang nicht störend. Bei richtiger Abstimmung mittels des Verzögerungsventiles V8 für den Öffner V5 ist der einstellbare Kolbenweg des Verzögerungsventiles V7 für den Schließer V6 proportional zur Öffnungszeit und damit proportional zur gewünschten Beschleunigung $\ddot{X}$ des Schlittens 6. Weil der Kolbenweg des Verzögerungsventils V7 stufenlos verstellbar ist, kann auch der Betrag der Schlittenbeschleunigung stufenlos eingestellt werden. Wenn der Luftdruck für die Steuerung der Verzögerungsventile konstant bleibt, ist eine gute Reproduzierbarkeit der Verzögerungszeiten gegeben.

Wir der Startknopf S1 in die Aus-Position gebracht, so werden

1. die beiden Ventile V5 und V6 (Öffner und Schließer) durch Belüften in ihre Anfangsstellung gebracht. Dabei wird der Öffner V5 schneller belüftet als der Schließer V6, um ein Nachströmen von Luft aus dem Druckluftvorratskessel 10 in den Luftkessel 9 zu vermeiden, da dies zu unnötig langen Zurückstellzeiten des Schlittens 6 führen würde.

2. Der Druckkessel 9 wird über ein Abströmventil V9 entspannt, so daß sich die Druckdifferenz zwischen den Lufträumen 1 und 1' abbaut und der Schlitten 6 zurückläuft. Während des Rücklaufes bedient der Schlitten den Schalter ES1, der das Abströmventil V9 schließt und das Verbindungsventil V1 öffnet.

Zur Erzielung eines schnellen Rücklaufes it es zweckmäßig mit zwei Abströmventilen V9 und V10 zu arbeiten, die gleichzeitig geöffnet werden, so daß die Luft möglichst schnell aus dem Luftkessel 9 ausströmen kann. Um ein zu hartes Anfahren des Schlittens an seine Anschläge zu vermeiden, wird das Abströmventil V10 durch einen Schalter ES4 nach etwa halben Rückweg des Schlittens geschlossen.

Der Schlitten 6 ist nunmehr zum nächsten Bewegungsablauf bereit, sobald die Luftdrücke in den Kesseln ihre Sollwerte erreicht haben. Um diese Zeit möglichst kurz zu halten, ist es zweckmäßig, die Steuerdruckluft aus einem getrennten Behälter zu beziehen. Bis auf den Öffner V5 und den Schließer V6 sind alle Ventile elektrisch gesteuert. Grundsätzlich wäre das auch bei den Ventilen V5 und V6 möglich. Die handelsüblichen elektrischen Steuerungen führen aber zu zu langsamen Ventilbewegungen. Deshalb werden die Ventile V5 und V6 pneumatisch gesteuert. Die übrigen Ventile können auch pneumatisch gesteuert werden.

Der Anfangsdruck $p_o$ in den Luftkesseln 9 und 8 kann durch ein Druckregelventil V11 eingestellt werden. Weil die ablaufenden Druckänderungen linear mit dem Absolutdruck zusammenhängen, die Antriebskraft für den Schlitten jedoch vom Überdruck gegenüber dem Umgebungsdruck abhängt, kann die Konstanz der Beschleunigung $\ddot{X}$ durch die Variation des Anfangsdruckes $p_o$ in den Kesseln 9 und 8 einfacher beeinflußt werden als durch die Konizität der Kolben 3, 3' und der Zylinder 4, 4' sowie durch die Größe der Luftvolumina 1 und 9 bzw. 1' und 8. Eine Reduzierung des Anfangsdruckes $p_o$ führt zu einem leichten Abfall der zuvor konstanten Beschleunigung. Eine Erhöhung des Anfangsdruckes bewirkt einen entsprechenden Beschleunigungsanstieg. Hiermit lassen sich die Einflüsse kompensieren, die der Prüfling 5, z. B. durch Gurtauszugskraftänderung, auf den Schlitten 6 ausübt. Aus der Figur 5 ist die Änderung des Beschleunigungsverlaufes durch Variation des Anfangsdruckes $p_o$ ersichtlich. Der Anfangsdruck $p_o$ wird durch das Ventil V11 eingestellt. Die gesamte Pneumatik der Prüfeinrichtung wird aus einer Druckluftquelle über eine Luftversorgungseinheit V12 gespeist.

**Ansprüche**

1. Prüfeinrichtung für Beschleunigungssensoren, bestehend aus einem reibungsarm gelagerten Schlitten und aus einer mit dem Schlitten gekoppelten pneumatischen Antriebseinrichtung zum Erzeugen einer zunächst ansteigenden und dann gleichbleibenden Beschleunigung des Schlittens mit dem darauf befestigten Prüfling, wobei die pneumatische Antriebseinrichtung mindestens je einen Kolben und einen Zylinder sowie Steuermittel für die Luftzufuhr aufweist, durch die in den Luftraum des Zylinders aus einem Druckluftvorratskessel über ein schnell öffnendes Ventil eine während des Beschleunigungsanstiegs zeitlich gleichbleibende Luftmenge einführbar ist, dadurch gekennzeichnet, daß

a) dem Luftraum (1) des Zylinders (4) über einen großen Querschnitt ein großvolumiger Luftkessel (9) vorgeschaltet ist, der mit dem Druckluftvorratskessel (10) über eine Verbindungsleitung (11) und eine schnell öffnende und schnell schließende Ventileinrichtung (V5, V6) verbunden ist,

b) zur Kompensation des Druckabfalls durch die kolbenwegbedingte Volumenänderung des Luftraumes (1 + 9) der Kolben (3) und/oder die Lauffläche des Zylinders (4) konisch ausgebildet sind, wobei als Dichtung zwischen Kolben (3) und Zylinder (4) ein Rollbalg (2) vorgesehen ist und

c) daß der Kolben der pneumatischen Antriebseinrichtung unmittelbar mit dem Schlitten verbunden ist.

2. Prüfeinrichtung nach Anspruch 1, dadurch gekennzeichnet, daß die Verbindungsleitung (11), wie ansich bekannt, einen in seiner Größe einstellbaren Drosselquerschnitt (A) enthält und der Druck in dem Druckluftvorratskessel (10) so hoch ist, daß der Drosselquerschnitt (A) mit etwa Schallgeschwindigkeit durchströmt wird.

3. Prüfeinrichtung nach Anspruch 1 oder 2, dadurch gekennzeichnet, daß die Ventileinrichtung aus zwei hintereinander geschalteten Ventilen besteht, von denen das eine (V5) besonders schnell öffnet und das andere (V6) besonders schnell schließt.

4. Prüfeinrichtung nach Anspruch 3, dadurch gekennzeichnet, daß zur Unterdrückung des Laufzeiteinflusses der Ventile (V5, V6) für jedes dieser Ventile eine gemeinsame gleichzeitig ansteuerbare und getrennt einstellbare Verzögerungseinheit (V8 bzw. V7) vorgesehen ist.

5. Prüfeinrichtung nach Anspruch 4, dadurch gekennzeichnet, daß die Ventile (V5, V6) pneumatische betätigt sind und die Verzögerungseinheiten aus Steuerventilen (V8 bzw. V7) mit vorgeschalteter Drossel-Volumenstrecke bestehen, bei der die Drossel und/oder das Volumen, z. B. durch einen verschiebbaren Kolben (V7.1) einstellbar sind.

6. Prüfeinrichtung nach Anspruch 1 bis 5, dadurch gekennzeichnet, daß zur Unterdrückung der Balgeffekte am Beginn der Kolbenbewegung zwischen dem Luftkessel (9) und dem Druckluftvorratskessel (10) eine weitere Verbindungsleitung (12) mit einem Ventil (V2) vorgesehen ist.

7. Prüfeinrichtung nach Anspruch 1 bis 6, dadurch gekennzeichnet, daß zur Rückstellung des Kolbens (3) und zur Vorspannung des Rollbalges (2) vor dem Start an der anderen Seite des Schlittens (6) spiegelbildlich ein weiterer Kolben (3') mit einem weiteren Rollbalg (2') und einem weiteren Zylinder (4) sowie in Verbindung mit einem weiteren Luftraum (1') ein weiterer Luftkessel (8) mit großem Volumen vorgesehen sind.

8. Prüfeinrichtung nach Anspruch 7, dadurch gekennzeichnet, daß die Luftkessel (8 und 9) über ein Absperrventil (V1) verbindbar und über ein Druckregelventil (V11) an eine Luftversorgungeinheit (V12) anschließbar sind.

9. Prüfeinrichtung nach Anspruch 8, dadurch gekennzeichnet, daß an dem Luftkessel (9) Abströmventile (V9 und V10) angeordnet sind, die eine Verbindung zur Atmosphäre herstellen und getrennt schnell schließbar sind.

**Claims**

1. Testing device for acceleration sensors, consisting of a low-friction carriage and of a pneumatic drive arrangement coupled to the carriage for producing an acceleration of the carriage with the test object secured thereto which initially increases and then remains the same, the pneumatic drive arrangement having at least one piston and one cylinder as well as control means for the supply of air, a quantity of air remaining the same in time during the increase of acceleration being able to be fed by means of said control means into the air space of the cylinder from a compressed-air reservoir via a quickly opening valve, characterised in that

   a) the air space (1) of the cylinder (4) has upstream thereof a large-volume air tank (9) via a large cross section, said air tank being connected with the compressed-air reservoir (10) via a connecting line (11) and a quickly opening and quickly shutting valve arrangement (V5, V6), and

   b) for compensating the pressure drop by the volume variation of the air space (1 + 9) caused by piston travel the piston (3) and/or the bearing surface of the cylinder (4) are formed conical, a rolling bellows (2) being provided as a seal between piston (3) and cylinder (4), and

   c) the piston of the pneumatic drive arrangement is directly connected to the carriage.

2. Testing device according to claim 1, characterised in that the connecting line (11) contains, as is known per se, a restrictor cross section (A) the size of which is adjustable and the pressure in the compressed-air reservoir (10) is so high that the restrictor cross section (A) is passed with about sonic velocity.

3. Testing device according to claim 1 or 2, characterised in that the valve arrangement consists of two valves in series of which the one (V5) opens especially quickly and the other (V6) shuts especially quickly.

4. Testing device according to claim 3, characterised in that for suppressing the transit-time effect of the valves (V5, V6) there is provided for each of these valves a common, simultaneously controllable and separately adjustable delay unit (V8 and V7, respectively).

5. Testing device according to claim 4, characterised in that the valves (V5, V6) are pneumatically operated and the delay units consist of control valves (V7 and V8, respectively) with upstream restrictor/volume stretch wherein the restrictor and/or the volume are adjustable e. g. by a shiftable piston (V7.1).

6. Testing device according to claims 1 to 5, characterised in that for suppressing the bellows effects at the starting of piston movement there is provided between the air tank (9) and the compressed-air reservoir (10) a further connecting line (12) including a valve (V2).

7. Testing device according to claims 1 to 6, characterised in that for resetting the piston (3) and for prestressing the rolling bellows (2) before starting there are provided at the other side of the carriage (6) in a mirror-image arrangement a further piston (3') with a further rolling bellows (2') and a further cylinder (4) as well as in communication with a further air space (1') a further air tank (8) with a large volume.

8. Testing device according to claim 7, characterised in that the air tanks (8 and 9) are joinable via a shut-off valve (V1) and connectable to an air supply unit (V12) via a pressure control valve (V11).

9. Testing device according to claim 8, characterised in that flow-off valves (V9 and V10) are arranged at the air tank (9), said valves providing a connection to atmosphere and being quickly shuttable separately.

**Revendications**

1. Installation de contrôle pour capteurs d'accélération se composant d'un chariot monté à faible frottement et d'un dispositif de commande pneumatique accouplé au chariot et destiné à produire une accélération tout d'abord croissante, puis constante du chariot, qui porte l'élément soumis au contrôle y fixé, le dispositif de commande pneumatique comportant au moins un piston et un cylindre, de même que des moyens de commande pour l'amenée de l'air par lesquels une quantité d'air constante dans le temps pendant l'augmentation de l'accélération peut être introduite d'un récipient d'approvisionnement en air comprimé, par une valve à ouverture rapide, dans la chambre à air du cylindre, caractérisée

   a) en ce qu'en amont de la chambre à air (1) du cylindre (4) est monté, par une grande section transversale, un récipient à air de grande capacité (9) qui est relié au récipient d'approvisionnement en air comprimé (10) par un conduit de raccordement (11) et par un dispositif de valves à ouverture rapide et à fermeture rapide (V5, V6) ;

   b) en ce que pour la compensation de la chute de pression provoquée par la modification du volume de la chambre à air (1 + 9) due au trajet du piston, le piston (3) et/ou la face de course du cylindre (4) sont de forme conique, un soufflet roulant (2) étant prévu comme élément assurant l'étanchéité entre le piston (3) et le cylindre (4), et

   c) en ce que le piston du dispositif de commande pneumatique est relié directement au chariot.

2. Installation de contrôle suivant la revendication 1, caractérisée en ce que le conduit de raccordement (11), comme il est connu en soi, présente une section transversale d'étranglement (A) dont la dimension peut être réglée et en ce que la pression qui règne dans le récipient d'approvisionnement en air comprimé (10) est si élevée que la section transversale d'étranglement (A) est traversée à une vitesse qui correspond approximativement à la vitesse du son.

3. Installation de contrôle suivant l'une ou l'autre des revendications 1 et 2, caractérisée en ce que le dispositif de valves se compose de deux valves montées l'une à la suite de l'autre, dont l'une (V5) s'ouvre particulièrement rapidement et dont l'autre (V6) se ferme particulièrement rapidement.

4. Installation de contrôle suivant la revendication 3, caractérisée en ce que pour supprimer l'influence de la durée de fonctionnement des valves (V5, V6), il est prévu, pour chacune de ces valves, une unité de retardement, les unités de retardement (V8 et V7) pouvant être actionnées en même temps en commun et pouvant être réglées séparément.

5. Installation de contrôle suivant la revendication 4, caractérisée en ce que les valves (V5, V6) sont actionnées pneumatiquement et en ce que les unités de retardement se composent de valves de commande (V8 et V7) à course volumétrique d'étranglement commandée au prélable, l'étranglement et/ou le volume pouvant être réglés par exemple par un piston coulissant (V7.1).

6. Installation de contrôle suivant les revendications 1 à 5, caractérisée en ce que pour supprimer les effets du soufflet au début du déplacement du piston, il est prévu, entre le récipient à air (9) et le récipient d'approvisionnement en air comprimé (10), un autre conduit de raccordement (12) dans lequel est montée une valve (V2).

7. Installation de contrôle suivant les revendications 1 à 6, caractérisée en ce que pour le rappel du piston (3) et pour la tension préalable du soufflet roulant (2) avant le démarrage, il est prévu à l'autre côté du chariot (6), comme l'image énantiomorphe du piston précité et du soufflet roulant précité, un autre piston (3'), avec un autre soufflet roulant précité, un autre piston (3'), ainsi qu'en liaison avec une autre chambre à air (1'), un autre récipient à air (8).

8. Installation de contrôle suivant la revendication 7, caractérisée en ce que les récipients à air (8 et 9) peuvent être reliés par l'intermédiaire d'une valve d'arrêt (V1) et peuvent être raccordés à une unité d'alimentation en air (V12) par l'intermédiaire d'une valve de réglage de pression (V11).

9. Installation de contrôle suivant la revendication 8, caractérisé en ce que sur le récipient à air (9) sont montées des valves d'écoulement (V9 et V10) qui établissent une communication avec l'atmosphère et qui peuvent être rapidement fermées séparément.

| Vorschrift | Land |
|---|---|
| ADR 4C | Australien |
| MVSS 209 | USA |
| ECE R16 | Europa |

Figur 1

Figur 2a

Figur 2b

Fig. 2

Fig. 5

Figur 3